# FASCICULE DE BREVET EUROPEEN

(11) **EP 1 049 964 B1**
(45) Date de publication et mention de la délivrance du brevet: **13.03.2002**
(21) Numéro de dépôt: 98956726.8
(22) Date de dépôt: 27.11.1998
(51) Int. Cl.: G05D 1/02, B25J 19/00, A47L 9/00

(54) **AMELIORATIONS A DES ROBOTS MOBILES ET A LEUR SYSTEME DE COMMANDE**
VERBESSERUNGEN BEI BEWEGLICHEN ROBOTERN UND BEI IHREN STEUERUNGSSYSTEMEN
IMPROVEMENTS TO MOBILE ROBOTS AND THEIR CONTROL SYSTEM

(30) Priorité: 27.11.1997 BE 9700958; 22.12.1997 BE 9701046; 07.05.1998 BE 9800341
(43) Date de publication de la demande: 08.11.2000
(60) Demande divisionnaire: 01202945.0
(73) Titulaire: Solar & Robotics, 1050 Bruxelles (BE)
(72) Inventeur: COLENS, André, B-1330 Rixensart (BE)
(74) Mandataire: Colens, Alain
(86) Numéro de dépôt international: BE9800185
(87) Numéro de publication internationale: WO9928800

(56) Documents cités:
- US-A- 4 679 152
- US-A- 4 777 416
- US-A- 5 440 216
- PATENT ABSTRACTS OF JAPAN vol. 008, no. 089 (P-270), 24 avril 1984 & JP 59 005315 A (HITACHI SEISAKUSHO KK), 12 janvier 1984

## Description

La présente invention concerne un robot mobile autonome, de préférence un robot de nettoyage, et un système de contrôle d'un robot apte à le guider vers une station fixe et/ou apte à adapter son comportement au degré local de saleté et/ou comportant une brosse rotative et apte à le dégager lors du blocage de ladite brosse.

L'invention concerne notamment un système de guidage de la trajectoire d'un robot mobile autonome y compris le positionnement par rapport et l'approche vers une station fixe de recharge en énergie ou de décharge d'élément récoltés par le robot. Il s'agira généralement mais pas exclusivement d'un robot de nettoyage du sol avec batteries rechargeables, par exemple un robot aspirateur. Ainsi, il peut par exemple aussi s'agir d'un robot d'épandage ou d'un robot de surveillance.

Un robot mobile autonome, alimenté par des batteries par exemple, présente une autonomie limitée. Si on veut obtenir un fonctionnement continu, le robot doit pouvoir venir recharger ses batteries à intervalle régulier. D'autres fonctions peuvent aussi nécessiter l'accès régulier à un point fixe comme le délestage d'un sac à poussière (aspirateur robotique) ou la réalimentation en carburant (moteur thermique) ou en un produit d'épandage.

Une solution à ce problème a été exposée (voir EP-A-0744093) par laquelle l'engin mobile, sensible au gradient d'un champ électromagnétique vient se repositionner automatiquement à l'aplomb d'une bobine parcourue par un courant alternatif.

Dans le cas de surfaces comportant des éléments perturbant le champ électromagnétique (ferraillage de béton par exemple), le système en question fonctionne difficilement.

Il peut être alors préférable d'associer à la station fixe une source de rayonnement infrarouge (émetteur LED) permettant à l'engin mobile de la repérer à distance.

Le brevet US 4,679 152 divulgue un robot mobile autonome apte à rejoindre automatiquement une station de recharge lorsque le niveau de charge d'une batterie rechargeable descend en dessous d'une valeur prédéterminée. La station de recharge et le robot mobile sont munis d'une source de rayonnement infrarouge et d'un système de détection relié à un microordinateur. Le robot et la station de recharge peuvent ainsi communiquer dans les deux sens. Il est prévu un programme de recherche faisant appel à un système opto-acoustique et qui peut comporter un déplacement aléatoire du robot sur la surface de travail. Pareil système s'avère compliqué et s'avère peu efficace lorsque un positionnement très précis du robot par rapport à la station de recharge est exigé pour l'opération de recharge.

La présente invention se propose de remédier à cet inconvénient en prévoyant, selon le mode de réalisation le plus simple, un système faisant intervenir un faisceau étroit émis par la station de recharge, détectable par un détecteur directionnel situé sur le châssis au centre de rotation du robot.

Un système de guidage et un robot mobile selon l'invention sont définis dans les revendications 1 et 10.

Selon un premier aspect de l'invention, un faisceau relativement étroit compris par exemple entre 2 et 10°, de préférence environ 5°, émerge de la station fixe. L'émetteur correspondant et la station y attachée sont préférentiellement orientés de manière à ce que le faisceau s'étendre sur une longueur maximum de la surface de travail du robot. Le robot mobile, muni d'un système de détection directionnel d'émission infrarouge, se déplacant essentiellement de manière aléatoire sur cette surface, croise et détecte le faisceau étroit de manière statistiquement périodique.

Selon un mode de réalisation préféré, si une certaine durée de travail est dépassée p.e. 15 à 45 minutes, quel que soit l'état de charge de la batterie, le robot reviendra vers la station fixe pour un cycle de recharge dès qu'il croise un faisceau infra-rouge d'une intensité donnée. S'il se trouve à proximité de la station après la durée de travail susmentionnée, il la rejoindra et se rechargera donc. Ce procédé évite une opération de recherche du faisceau lorsque l'état de la batterie se situe au dessous d'un niveau prédéterminé. L'étroitesse du faisceau permet un positionnement final précis vis à vis de la station fixe, et donc par exemple une recharge par induction ou plus simplement par contact physique de conducteurs.

Au fur et à mesure que le temps de travail augmente, l'algorithme du microprocesseur fait en sorte que le seuil d'intensité du faisceau infra-rouge à détecter par le robot mobile, et initiant l'étape de retour, décroit de manière linéaire ou par incrément.

L'étape de retour peut comprendre l'arrêt de toutes les fonctions du robot qui ne sont pas indispensable pour retrouver la station de recharge.

Selon un autre aspect de l'invention, le système de guidage et de positionnement fait appel à au moins deux faisceaux de directionalité différentes et issus de la station fixe, le ou les faisceaux les moins directionnels servant à l'approche vers une station fixe, tandis que le faisceau plus directionnel est utilisé pour l'étape ultime de positionnement précis du robot par rapport à cette station fixe. Cette variante permet un guidage du robot dans un environnement plus complexe (p.e. un appartement à plusieurs pièces, avec plusieurs portes).

L'émetteur du faisceau moins directionnel est localisé au niveau de la station fixe de manière à ce que son influence diminue lors de l'étape ultime d'approche et de positionnement du robot. Il peut être orientable à volonté et situé à l'extrémité d'un bras surplombant la station fixe proprement dite.

En phase de positionnement, il sera ainsi avantageusement localisé au dessus du robot, le faisceau émis étant hors du plan de détection des détecteurs du robot. Ce dernier par un mouvement de pivotement autour de son centre est alors apte à déterminer une position finale de recharge, par exemple avec contact physique, en se basant sur le signal de l'émetteur de plus forte directionalité situé dans le plan de détection des détecteurs du robot.
La puissance des faisceaux peut être différente, le faisceau le plus puissant étant généralement mais pas nécessairement le faisceau le moins directionnel.

Le robot comprend un système de détection directionnel d'émission infrarouge, par exemple composé d'au moins deux détecteurs directionnel dont les intensités des signaux sont comparés, de manière connue, par le microordinateur pour commander un pivotement vers la source d'émission. Ces détecteurs sont préférentiellement situés sur le châssis au centre du robot, dirigés dans le sens du mouvement du robot. Eventuellement, un ou plusieurs autres détecteurs sont prévus, par exemple sur les côtés ou à l'arrière, avantageusement avec une direction de détection sensiblement opposée à celle des détecteurs centraux. Avantageusement aussi, les faisceaux reconnus par les détecteurs du robot seront modulés afin d'éviter tout bruit de fond.

Selon cet aspect de l'invention, on propose donc un système de repérage et de positionnement par rapport à une station fixe pour robot mobile autonome se déplacant dans des locaux caractérisé en ce que la station fixe émet deux faisceaux infrarouges modulés, essentiellement dans le plan des locaux, un des faisceaux étant sensiblement plus directionnel que l'autre. L'émetteur du faisceau le moins directionnel permet le repérage et l'approche de la station fixe par le robot mobile portant des détecteurs directionnels sensibles à ces faisceaux. Les signaux des détecteurs sont traités par un microordinateur commandant l'avancement du robot mobile, l'émetteur de plus faible directionalité étant situé sur la station fixe à un emplacement tel qu'il se trouve en aplomb du robot mobile lorsque ce dernier a rejoint sa position désirée dans la station fixe, le faisceau le plus directionnel est alors apte à être davantage détecté par lesdits détecteurs, le positionnement précis étant effectué par rotation de l'engin autour d'un axe vertical selon un algorithme basé sur la détection du faisceau étroit .

Selon une variante on propose un système de repérage et de positionnement à une station fixe pour robot mobile autonome se déplacant dans des locaux caractérisé en ce que la station fixe émet au moins trois faisceaux infrarouges modulés, un des faisceaux étant sensiblement: plus directionnel que les autres. Les émetteurs du faisceau le moins directionnel, et généralement de plus forte intensité, permet le repérage et l'approche de la station fixe par le robot mobile portant des détecteurs directionnels sensibles auxdits faisceaux. Les signaux des détecteurs étant traités par un microordinateur commandant l'avancement du robot mobile, les émetteurs de moindre directionalité étant dirigés et situés sur la station fixe à des emplacements tels que les faisceaux se croisent à proximité immédiate de la station, le faisceau le plus directionnel, qui peut être de moindre intensité, étant alors apte à être davantage détecté par lesdits détecteurs, le positionnement précis étant effectué par rotation de l'engin autour d'un axe vertical selon un algorithme basé sur la détection du faisceau étroit .

Selon encore un autre variante, la modulation des faisceaux émis par la station fixe, comprenant alors un microordinateur, peut transmettre des informations à transmettre au robot, ou à un robot parmi d'autres si plusieurs robots sont utilisés avec une même station centrale. Ces informations peuvent se rapporter à la disponibilité de la station de charge et/ou de décharge, ou peuvent constituer une instruction de mode de travail, d'arrêt ou de rappel du robot, de localisation sonore du robot etc.. Eventuellement on peut aussi prévoir la transmission en retour vers la station fixe, à l'aide d'un émetteur infrarouge porté par le robot.

La présente invention concerne également une technique de guidage pour le nettoyage de sol par aspiration de poussière, applicable aux robots de nettoyage autonomes.

Le document EP-A-0769923 propose un engin autonome mobile de nettoyage de sol par aspiration, de faible puissance et de petite taille lui permettant de couvrir facilement une surface encombrée, par exemple, de meubles.

La recharge des batteries du robot est avantageusement couplée à la décharge de la poussière accumulée.

Le contenu du document susmentionné est incorporé par référence dans la présente description.

La faible puissance de ce robot aspirateur ne permet cependant pas toujours d'effectuer un nettoyage approfondi en un seul passage. Il peut donc être nécessaire lorsque l'engin est à l'aplomb d'une surface particulièrement encrassée, de prévoir un temps de passage plus long (par exemple passant de 20 cm/sec à 10 cm/sec) et/ou un trajet comportant des passages complémentaires pour nettoyer complètement la surface.

Dans ce but, selon un autre aspect de l'invention, une technique de nettoyage particulière est proposée, technique applicable à tout robot autonome de nettoyage par aspiration et/ou brossage.

La technique de guidage pour le nettoyage de sol par un robot aspirateur est en effet caractérisé en ce que le trajet suivi par le robot dépend de la quantité de particules présente sur la surface à nettoyer, ladite quantité étant estimée par un analyseur de particules situé à proximité de l'orifice d'aspiration, ou dans une cavité de brossage du robot, ledit analyseur envoyant des signaux à un microordinateur porté par le robot mobile et commandant le déplacement du robot en fonction des dits signaux.

Par ailleurs, ledit analyseur de particules peut avoir aussi comme fonction de déterminer également le degré de remplissage du réservoir à poussière. Si la poussière s'accumule au delà d'un certain point un même faisceau infrarouge localisé après l'orifice d'aspiration, c'est à dire au niveau du réservoir précédent le filtre, sera interrompu, ce que le microordinateur interprètera comme un signal correspondant.

En fonction de la quantité mesuré de poussière aspirée, le microordinateur peut par exemple commander un ralentissement et/ou un mouvement de va et vient linéaire du robot mobile.

Le microordinateur peut aussi commander un mouvement de nettoyage systématique, par exemple un mouvement de va et vient en éventail, du robot mobile.

Avantageusement le microordinateur peut prendre en compte la grosseur des particules et leur nombre, selon l'amplitude et la fréquence des signaux émis par l'analyseur de particules. Une analyse du type de poussière récoltée grâce à la connaissance de la grosseur des grains et de leur nombre permet d'affiner le comportement du robot en agissant sur la trajectoire, la vitesse de rotation de la brosse et/ou la puissance de la turbine de l'aspirateur.

L'analyseur de poussière comporte par exemple un émetteur et un récepteur, de préférence infrarouge.

Le microordinateur peut avantageusement garder en mémoire une moyenne globale du niveau de poussière détectée par le détecteur de poussière sur une grande distance, l'activation d'un algorithme de nettoyage particulier tenant compte de ladite moyenne.

De plus, avantageusement, le robot aspirateur peut comprendre un détecteur de poussière dont un ou plusieurs éléments sont périodiquement ou constamment désencrassés automatiquement par un flux d'air dépoussiéré dirigé vers sa surface.

Selon un autre aspect de la présente invention le robot autonome est un robot comprenant une brosse rotative.

L'invention propose ainsi un robot de nettoyage d'une surface comportant comme élément de nettoyage au moins une brosse rotative et comportant un microordinateur contrôlant au moins, via un algorithme, la vitesse et/ou le trajet du robot caractérisé en ce que le microordinateur est associé à un algorithme qui tient au moins compte, pour déterminer ladite vitesse et/ou ledit trajet, de la mesure de la vitesse de rotation de ladite brosse rotative. Le robot de nettoyage est typiquement un robot aspirateur.

Avantageusement, le microordinateur du robot-aspirateur tient au moins compte, pour déterminer la puissance d'aspiration, de la mesure de la vitesse de rotation de ladite brosse rotative. La puissance d'aspiration peut entre autres être dépendante de la vitesse de rotation de ladite brosse.

Le microordinateur est apte à tenir compte de la mesure de la vitesse de rotation du moteur pour déterminer le comportement dudit robot.

La présence de brosse rotative présente cependant l'inconvénient de voir la brosse se bloquer lorsque celle-ci rencontre, par exemple, les franges d'un tapis disposé sur la surface à nettoyer.

Une solution à ce problème a été décrite dans la demande de brevet PCT WO 97/40734 et consiste à inverser le sens de rotation de la brosse de manière à la dégager.

La solution de la présente demande a l'avantage de ne pas nécessiter un contrôle précis de la brosse ni une inversion de son sens de rotation de la brosse ce qui simplifie la conception du robot. Cette solution plus simple s'est par ailleurs révélée plus efficace en pratique.

Le dispositif selon l'invention comprend un système de brosse rotative - entraîné par un moteur - activé par le microcontrôleur (ou microordinateur) commandant l'ensemble des fonctions du robot autonome. Il est fait référence à cet égard à la demande de brevet PCT WO 96/01072 incorporée par référence dans la présente demande.

La vitesse de rotation de la brosse est analysée par le microcontrôleur, de préférence constamment.

Cette mesure peut être réalisée selon plusieurs techniques connues en soi (mesure du courant consommé par le moteur dans le cas d'un moteur DC, mesure de la fréquence des impulsions dans le cas d'un moteur sans balais, codeur optique, ...)

La mesure de cette vitesse de rotation permet au microcontrôleur de déduire certaines informations concernant, par exemple, la nature du sol nettoyé ou l'occurence d'un incident et d'adapter le comportement du robot en conséquence.

Lors de la survenue d'un incident, l'arrêt de la rotation de la brosse provoqué par exemple par l'enroulement de franges d'un tapis autour de l'axe de la brosse, le microcontrôleur débrayera la brosse et fera effectuer au robot une série de manoeuvres de désengagement. Le débrayage peut être selon la conception du robot, un débrayage mécanique mais sera de préférence un débrayage électrique, obtenu en coupant la connection du moteur à son alimentation.

A titre d'exemple on notera ci-après une série de manoeuvres s'étant révélées particulièrement adaptées.

Le robot recule d'une distance égale à son diamètre (brosse débrayée). Ce faisant les franges exercent un effort de déroulement sur l'axe de la brosse qui est en roue libre.

La brosse se libère. Le recul amène le robot en dehors de la zone de frange. Celui-ci effectue alors une rotation tout en réembrayant la brosse. Si à cet instant la brosse est toujours bloquée, il arrête son mouvement de rotation et effectue un nouveau recul suivi d'une nouvelle tentative de rotation et ainsi de suite jusqu'à ce que la brosse soit dégagée.

Le nombre de réitérations maximal est fixé par le programme et par la distance libre maximale de recul du robot.

Si cette distance maximale est atteinte sans que la brosse ne soit dégagée, le robot continuera les itérations mais en marche avant.

Si aucune manoeuvre ne réussit à libérer la brosse, le robot se met en signal d'attente et une intervention manuelle est nécessaire.

Avantageusement, l'analyse de vitesse de rotation de la brosse permet aussi de connaître la nature du sol nettoyé.

Une vitesse de rotation élevée signale un sol lisse, une vitesse plus lente un sol recouvert de moquette d'autant plus épaisse que la vitesse est lente. Cette analyse permet au robot d'adapter la vitesse d'avance et la puissance d'aspiration en fonction du sol à nettoyer.

L'invention peut être appliquée à d'autres robots de nettoyage que des robots-aspirateurs, par exemple des robots pour nettoyer des surfaces quelconques avec des liquides de nettoyage ou des robots pour cirer des parquets.

L'invention concerne donc aussi un robot de nettoyage comportant une brosse rotative et un microordinateur, un moyen de détection du blocage de la brosse rotative associé audit microordinateur, un algorithme de dégagement du robot, un moyen de débrayage de la brosse rotative par rapport au moteur y associé, l'algorithme comprenant un mouvement de recul du robot suivi d'une rotation et d'une reprise de l'avancement du robot.

Le moyen de débrayage consiste avantageusement en la déconnection du moteur par rapport à sa source d'alimentation.

En résumé, le robot de nettoyage d'une surface selon un aspect de l'invention comporte au moins une brosse rotative, la vitesse et/ou le trajet et/ou l'éventuelle puissance d'aspiration d'une turbine, étant dépendante de la vitesse de rotation de ladite brosse rotative.

Pour un robot aspirateur, en particulier domestique, le mouvement de rotation de la brosse a lieu de préférence dans un plan vertical à la surface à nettoyer.

L'invention concerne aussi un procédé de fonctionnement d'un robot de nettoyage comme susmentionné, le blocage de la brosse rotative étant détecté par ledit microordinateur qui contrôle dès lors une opération de dégagement du robot, ladite opération de dégagement comportant au moins un débrayage de la dite brossé rotative par rapport au moteur l'entraînant, couplé à un mouvement de recul du robot suivi d'une rotation et d'une reprise de l'avancement du robot. L'opération de dégagement est éventuellement susceptible de comprendre plusieurs cycles de débrayage-recul-rotation-avancement.

Selon encore un autre aspect de l'invention, qui peut s'appliquer à tout robot mobile autonome, plus avantageusement à des robots de grande dimension (p.e. 80 à 250 cm), le robot comporte un senseur de collision linéaire entourant en totalité ou en partie la base du carénage dans le plan de déplacement. Le senseur est constitué d'un conducteur linéaire métallique et, parallèlement, un élément linéaire en plastique conducteur, par exemple en caoutchouc conducteur. L'ensemble peut être compris dans une gaine ou une membrane souple isolante fixé le long du bord de la carrosserie. Par exemple, les éléments linéaires sont fixés par collage à deux faces internes opposées de la gaine. Ces deux éléments sont séparés par une faible distance. Les extrémités du plastique conducteur sont soumises à une différence de potentiel, par exemple de 5 volt soit 0 volt à une extrémité et 5 volt à l'autre extrémité. Lors d'une collision du robot avec un obstacle frontal ou latéral un des deux éléments est apte à entrer élastiquement en contact avec l'autre élément sous l'effet d'une pression momentanée résultant de l'impact du robot avec un obstacle. On comprendra que la tension instantanée sur l'élément conducteur est fonction de la distance du point d'impact à une des extrémité du plastique conducteur, qui présente une résistance beaucoup plus importante. Ainsi une tension mesurée de 2,5 volt signifie que l'impact a eu lieu approximativement au milieu du senseur linéaire. La mesure de la tension au niveau de l'élément conducteur constitue ainsi un signal envoyé au microordinateur pour localiser le point d'impact sur la base du carénage.

Les améliorations selon l'invention s'appliquent particulièrement aux robots mobiles se déplaçant, en mode de fonctionnement normal, de manière aléatoire sans système de positionnement précis.

Les différents aspects de l'invention seront mieux compris à la lecture de la description complémentaire qui suit, qui se réfère aux dessins fournis en annexe à titre d'exemple uniquement, et donc sans limiter la portée de cette description complémentaire. Chaque caractéristique décrite, prise séparément, est généralisable en fonction de la connaissance de l'homme de l'art. Les références numériques identiques d'un dessin à l'autre se rapportent à des éléments identiques ou équivalents.

Dans les dessins,
la fig. 1 représente schématiquement une vue de côté de la station fixe comportant deux émetteurs infra rouge,
la fig. 2 représente schématiquement une vue du dessus de la station fixe,
la fig. 3 représente schématiquement une vue du dessus d'une variante de la station fixe
la fig. 4 représente schématiquement la station et un robot mobile s'en approchant
la fig. 5 représente schématiquement, vu du dessus, un robot mobile circulaire.
la fig. 6 est une vue schématique en coupe de face d'une unité d'aspiration d'un robot muni d'une brosse selon l'invention et d'un système de détection de poussière.
la fig. 7 est une vie schématique de côté d'un robot à brosse selon l'invention
la fig. 8 est une vue illustrant la technique de nettoyage
la fig. 9 illustre un robot aspirateur à brosse vu de côté
la fig. 10 illustre le robot de la fig. 10 vu de face
la fig. 11 illustre un algorithme de désengagement lors du blocage de la brosse
les figs. 12a à 12c illustrent un procédé de localisation du point d'impact du robot avec un obstacle.

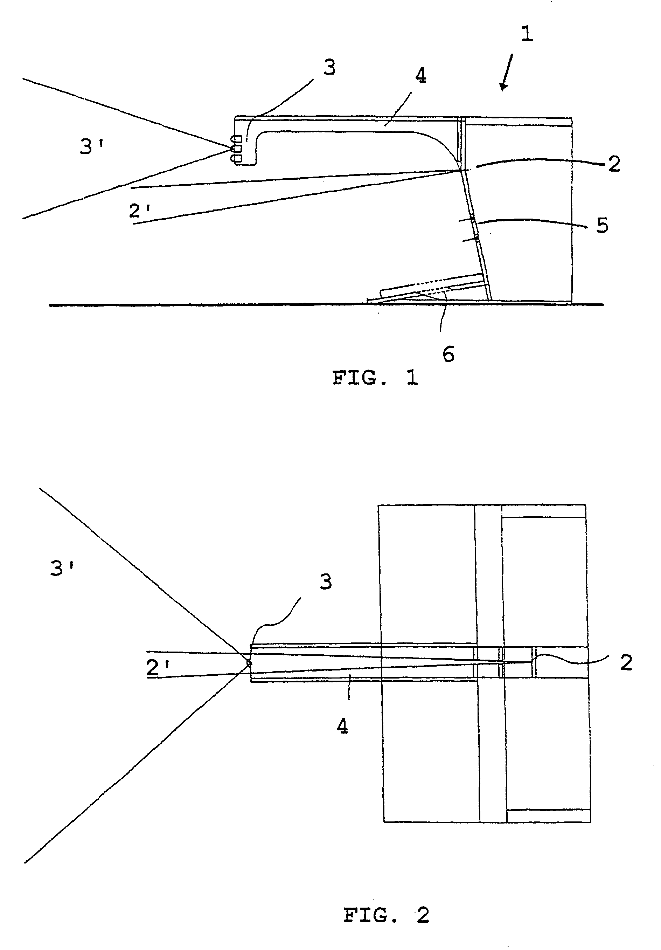

En se référant aux figs. 1 et 2, la station fixe 1 comporte deux générateurs de faisceaux infrarouge 2,3. La lumière infrarouge est modulée à une fréquence de quelques kilohertz (p.e. 56 KHz). La station comporte un émetteur IR 2 émettant un faisceau étroit d'environ 5° de faible puissance et un émetteur IR 3 émettant un faisceau large éventuellement omnidirectionnel de puissance plus élevée. L'émetteur 3 est placé de telle sorte que l'engin mobile puisse venir se positionner librement sous celui-ci, son centre de rotation pouvant coincider avec l'origine du faisceau 3'. L'émetteur peut ainsi être placé au bout d'un bras 4 surplombant la base, ou plaque de réception du robot, de la station de recharge.

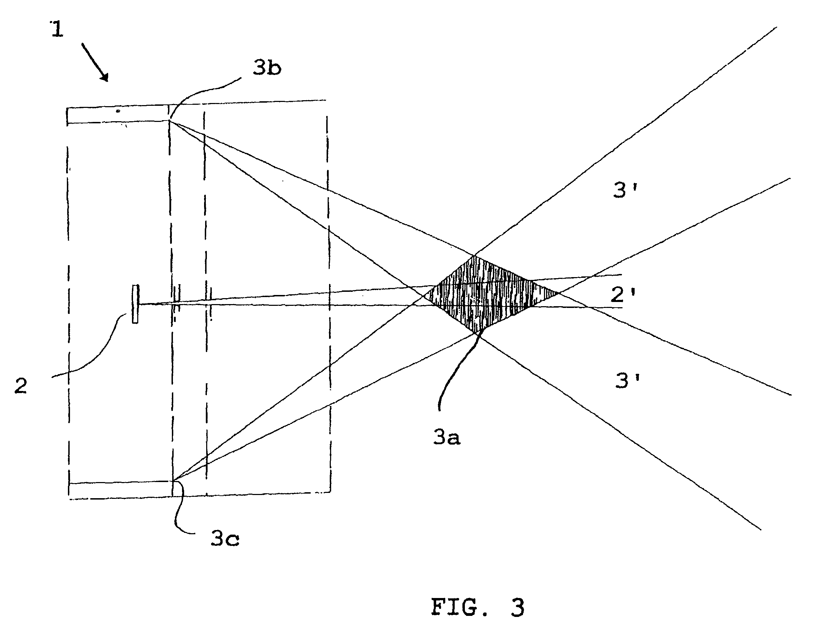

Selon un autre mode de réalisation illustré à la fig. 3, l'origine du faisceau 3' peut éventuellement être une origine virtuelle 3a obtenue par le croisement au point 3a de deux faisceaux d'origine 3b et 3c.

La station fixe comporte les différents éléments nécessaires à sa fonction: p.e. système de recharge de batterie comportant des contacts 5, orifice de vidange 6 pour un aspirateur.

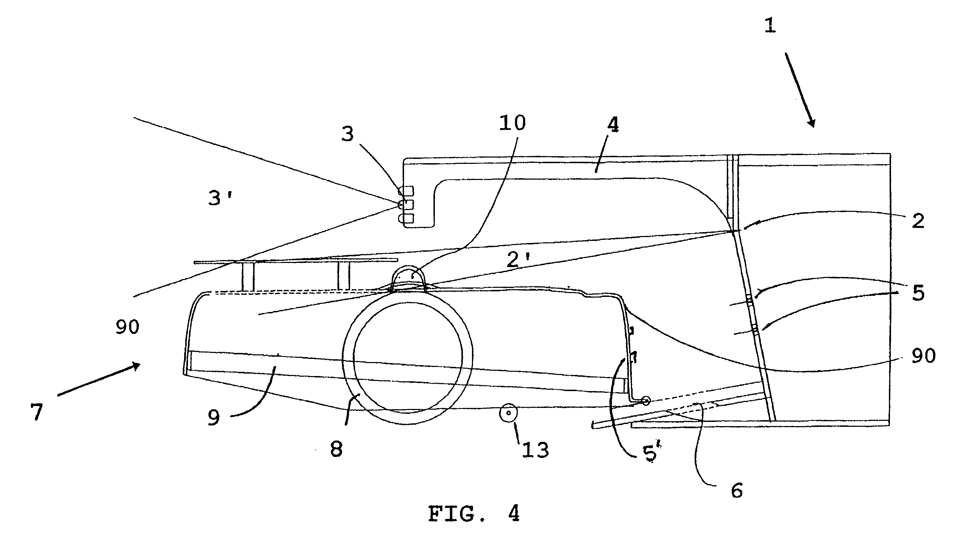

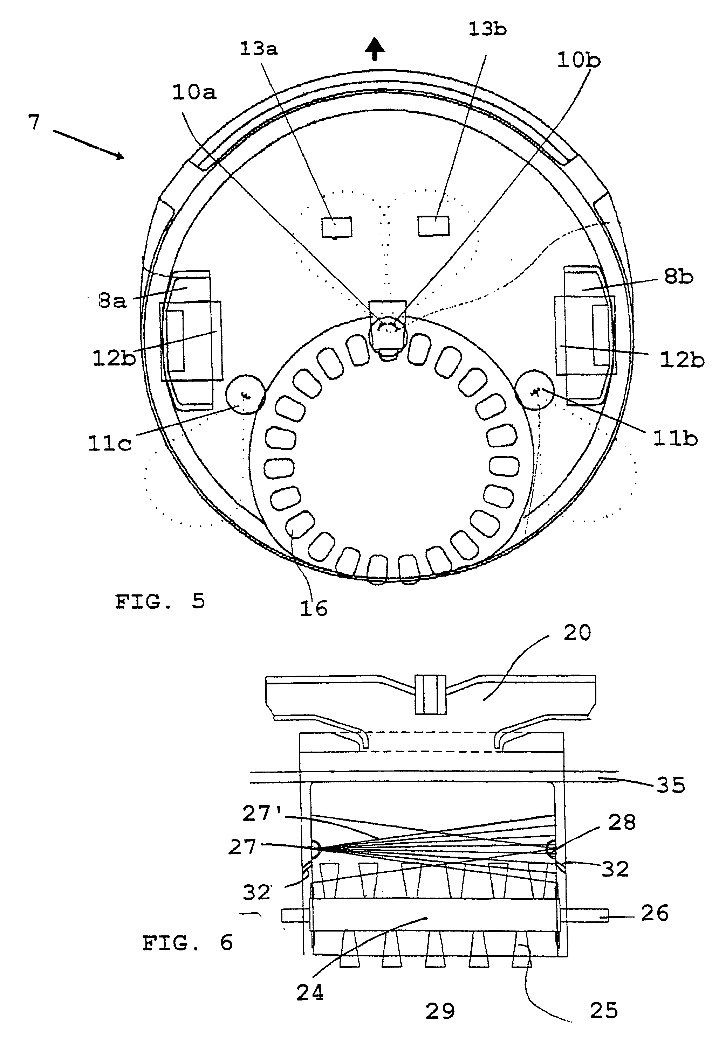

Le robot mobile 7 illustré schématiquement aux figs. 4 et 5 est un robot aspirateur comportant une ou plusieurs batteries rechargeables. Le robot est essentiellement circulaire et comporte deux roues motrices 8, permettant notamment une rotation sur lui-même. On distingue une bague circulaire de renforcement latéral de la carrosserie 90.

On distingue disposés en cercle les orifices 16 de sortie de la turbine de l'aspirateur. On distingue également les deux roues motrices 8a, 8b entraînées par les deux moteurs 12a,12b et des petites roulettes libres 13 à proximité de l'orifice d'aspiration (non illustré).

L'engin comporte en son centre de rotation au moins un capteur infrarouge 10 directionnel, de préférence deux (10a, 10b), dans ce dernier cas de préférence faisant entre eux un angle égal à leur angle de détection. Le ou les capteurs étant orientés dans le sens de -l'avancement de l'engin mobile. Un ou des capteurs supplémentaires 11a, 11b orientés autrement, de préférence vers l'arrière peuvent utilement compléter le dispositif. L'emplacement de ce ou ces capteurs supplémentaires ne devant pas nécessairement se situer au ou à proximité du centre de rotation de l'engin. Les signaux provenant des différents capteurs sont amplifiés, filtrés et connectés au microprocesseur contrôlant le déplacement de l'engin, par l'intermédiaire d'un convertisseur A/D. Les lobes de sensibilité de détection (directionalité) sont illustrés en pointillés.

Les signaux peuvent éventuellement être multiplexés c.à.d. analysés séquentiellement par le microordinateur contenu dans le robot, chaque signal étant connecté à son tour à la chaîne d'amplification et de conversion par l'intermédiaire d'un commutateur électronique.

Le faisceau infrarouge de forte puissance 3' illumine une partie de l'espace dans lequel circule l'engin. L'illumination se fait soit directement si il n'y a pas d'obstacle sur le trajet du faisceau, soit indirectement par réflexion ou diffraction dans le cas contraire. Ceci permet à la lumière IR de pénétrer dans des parties de l'espace n'étant pas en vue directe de la source. L'utilisation de faisceaux larges et de puissance importante permet de couvrir par exemple des locaux communiquant par des portes. Dans des environnements très complexes il peut être utile de disposer en complément des réflecteurs ou même des répéteurs.

L'engin mobile se déplaçant de manière principalement aléatoire, il arrive toujours un moment durant son déplacement où un de ses deux capteurs détectera le signal I.R., soit en provenance directe de la source soit par réflexion.

Le microordinateur commandera alors, de manière connue, une rotation de l'engin de façon à obtenir le même signal sur les deux capteurs frontaux 10a et 10b et un signal minimum sur l'arrière (ceci dans le cas de l'utilisation de 3 ou plus de détecteurs, 11a, 11b).

Le microordinateur fera alors progresser l'engin vers l'origine du signal, c'est à dire la station fixe 1. Cette dernier aspect de la technique de "homing" est connue en soi.

Si le signal provient d'une réflexion, il arrivera un moment où l'engin se dirigeant vers le point de réflexion rencontrera le rayon direct émis par l'émetteur 2 (voir figs. 1-4), ou un rayonnement de degré de réflexion moindre. Il pivotera alors naturellement vers la source du signal du fait de l'équilibrage du signal sur ses deux détecteurs frontaux 10a, 10b.

Arrivé à proximité de la station fixe, l'engin mobile 7 viendra se positionner de manière à faire coincider les capteurs situés à son centre de rotation (capteurs frontaux 10a, 10b) aux environs de l'origine du faisceau 3.

Son approche pouvant se faire de plusieurs directions, sa position ne sera sans doute pas adéquate pour réaliser une connection électrique via les connecteurs 5, 5' avec le chargeur ou toutes autres opérations. C'est alors que le faisceau étroit 2' de faible puissance entre en jeu. Arrivant à l'aplomb du générateur 3 le signal capté par les détecteurs 10a,10b diminue considérablement et devient nettement moins fort que le signal provenant du faisceau étroit 2'. En effet les capteurs ne sont pas omnidirectionnels et ne sont en particulier pas conçus pour détecter efficacement un signal infra-rouge dans la direction verticale par rapport à la surface de déplacement.

L'engin 7 va donc pivoter sur lui-même pour s'aligner avec le faisceau 2' et reprendre sa progression de manière à se positionner parfaitement sur la station fixe, et permettre ainsi, par exemple, une liaison électrique physique via les connecteurs 5, 5' pour l'opération de recharge des batteries.

Un autre aspect de la présente invention est illustré aux figs. 6 à 8
la fig. 6 est une vue schématique en coupe de face de l'unité d'aspiration du robot supporté par un élément du chassis 35, variante du robot des figures 4 et 5. Ce robot est muni d'une brosse 24 constitué de balais 25 tournant autour d'un axe 26.

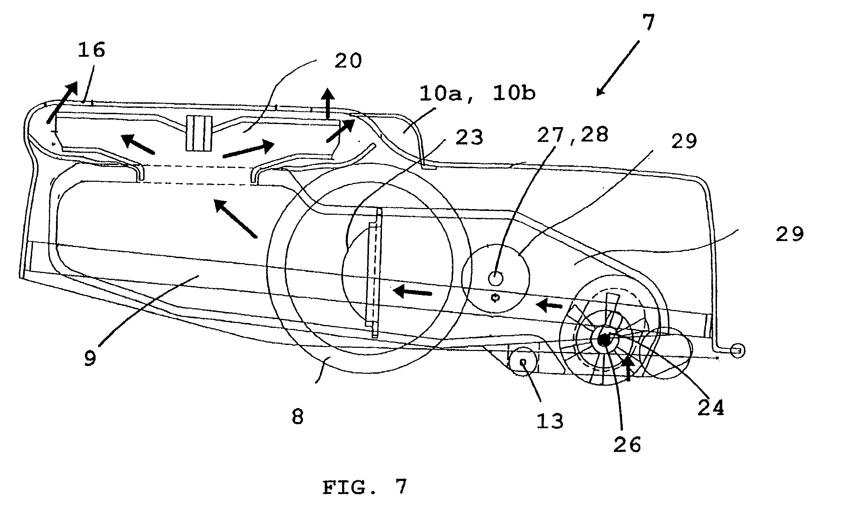

On distingue dans la figure 7 la turbine d'aspiration 20, des roues motrices 21, un filtre 23, l'aire circulaire 29 d'éclairage de l'émetteur 27, aire centrée sur le détecteur 28 , et des détecteurs infrarouge 10a, 10b. Les flèches de la fig. 7 illustrent le trajet de l'air dans le robot aspirateur.

Le dispositif particulier de détection de poussière selon un mode de mise en oeuvre de l'invention est prévu dans le robot mobile et comporte deux parties :
- Un analyseur de poussière d'une part constitué d'un élément émetteur infrarouge 27 et d'un élément récepteur infrarouge 28. Ces deux éléments sont disposés de part et d'autre de l'orifice d'aspiration 29 et sont placés dans l'axe l'un de l'autre. Lorsque des poussières sont aspirées ou projetées par la brosse rotative 24, elles créent en passant entre l'élément émetteur et l'élément récepteur une diffraction de la lumière 27' générant une variation de signal à la sortie de l'élément récepteur 28.

L'amplitude de la variation de signal est approximativement proportionnelle à la grosseur des grains et sa fréquence au nombre de grains passant par seconde à travers le faisceau.

Ce signal amplifié par un amplificateur logarithmique est analysé par le microordinateur contrôlant l'engin.

La valeur de l'intensité moyenne du faisceau reçu par le récepteur est également communiquée au microordinateur .
- D'autre part le microordinateur possède un programme lui permettant de réagir en fonction des éléments qui lui sont communiqués par l'analyseur susmentionné.

Le fonctionnement de l'engin selon ce mode de mise en oeuvre est décrit ci-après.

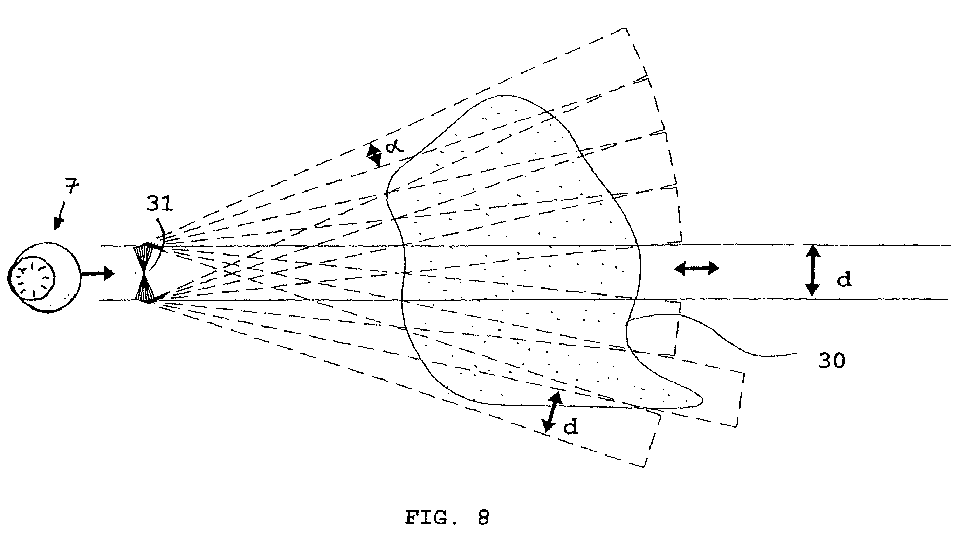

Lorsque l'engin se déplace sur la surface à nettoyer, le signal provenant du détecteur de poussière est constamment analysé par le microordinateur. Celui-ci fait réagir l'engin par exemple de la manière suivante :
- Si la surface sale est petite (détection de particules sur une distance inférieure à 1 cm), l'engin diminue sa vitesse de manière à augmenter le temps de nettoyage dans la zone considérée. Cette variation de vitesse peut être également liée à la dimension et à la fréquence des grains détectés.
- Si la surface sale est plus importante (détection de particules sur une distance comprise p.e. entre 1 et 5 cm), l'engin effectue un mouvement de va et vient jusqu'à ce que il ne détecte plus de poussière, il poursuit alors sa route.
- Si finalement la surface sale est suffisamment importante (p.e. plus de 5 cm), l'engin rentre dans un mode de nettoyage systématique tel que décrit dans la figure 8.

Dans la fig. 8 la distance d est la largeur effective d'aspiration de l'engin 7.

L'engin guidé par le microordinateur commence par faire un aller et retour pour déterminer la longueur totale de la tache 30. Revenu à son point de départ 31, il effectue une rotation à droite d'un angle α fonction de la longueur de la tache, il progresse jusqu'au bord de la tache 30 et revient à son point de départ 31 pour effectuer une nouvelle rotation à droite. Ainsi de suite jusqu'à ce que la partie droite de la tache soit nettoyée (absence de détection de particules). Il s'oriente à nouveau dans l'axe de la tache en tournant à gauche d'un angle égal à la somme des incréments effectués vers la droite et réitère le même scénario à partir du centre mais vers la gauche.

Lorsqu'une absence de particules aura été détectée sur la gauche, il revient au centre 31 et reprend sa progression normale.

D'autres algorithmes de nettoyage systématique peuvent être adoptés (parcours en spirale etc..), de manière moins préférée.

Le niveau de saleté pouvant différer fortement d'un local à l'autre, il peut être intéressant de démarrer le processus de nettoyage systématique tel que décrit précédemment seulement si le niveau de saleté instantanée est nettement supérieur au niveau moyen du local. Ceci est réalisé en gardant en mémoire une moyenne globale du niveau de poussière détectée par le détecteur de poussière sur une grande distance.

Le système de détection de poussière peut être monté de telle sorte qu'un flux d'air dépoussiéré ou sans poussière soit dirigé vers le détecteur et/ou l'émetteur 27, 28 pour empêcher l'encrassement rapide de ceux-ci.

Ce flux est amené par exemple par des canaux 32 prévu dans la paroi s'ouvrant en un orifice situé sous le détecteur et/ou l'émetteur. Alternativement et de manière actuellement moins préférée, le flux d'air peut être amené par une conduite déviant l'air rejeté par la turbine.

Un encrassement pourrait cependant quand même se produire diminuant l'amplitude des signaux reçus. Cet encrassement est détecté par le microordinateur grâce au second signal provenant du détecteur (intensité moyenne du faisceau). Le microordinateur peut soit tenir compte de cet encrassement en compensant automatiquement les lectures faites, soit agir sur l'émetteur infrarouge de manière à garder constante l'illumination moyenne du récepteur.

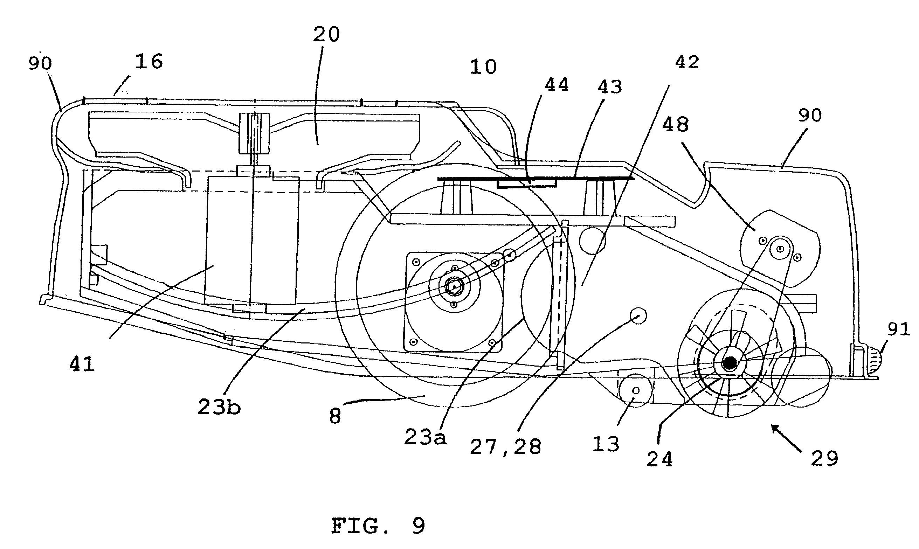

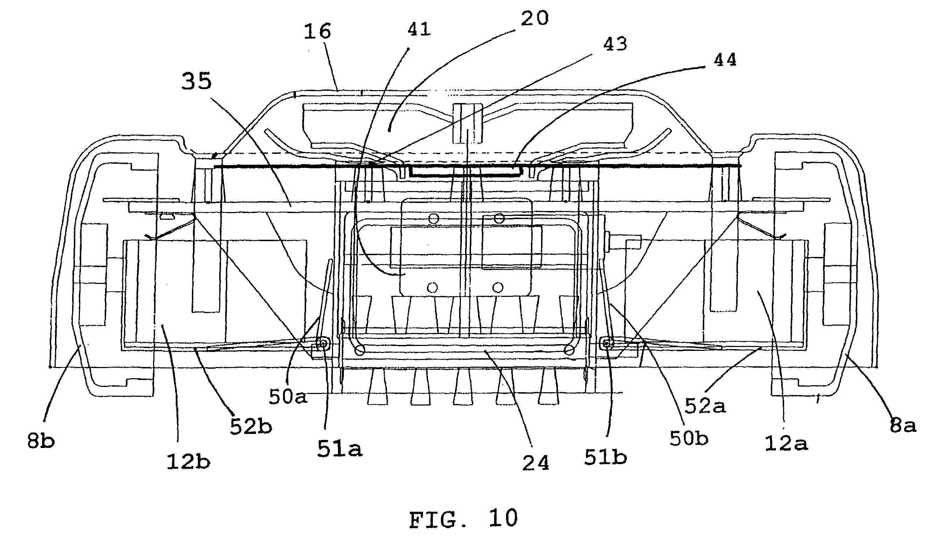

Les figs. 9 et 10 illustrent les composants d'un robot aspirateur avec brosse et détection de poussière selon un autre mode de mise en oeuvre de l'invention.

On y distingue une turbine 20 avec le moteur y associé 41 pour aspirer l'air et la poussière de l'orifice d'aspiration 29. On distingue également : un premier filtre 23a, et un second filtre 23b, plus fin, les roues motrices 8a et 8b, et les motoréducteurs 12a, 12b et une paire de roulettes 13, le moteur 48 de la brosse rotative 24, le réservoir à poussière 42 les détecteurs IR avants 10 et la butée 91 sur la carrosserie 90. On illustre également la carte de circuits intégrés 43 supportant le microprocesseur 44. A la fig. 10, on distingue plus précisément les ressorts de suspension 50a, 50b à deux bras (avec axe 51a, 51b) et les supports articulés 52, 52a des moteurs 12a, 12b.

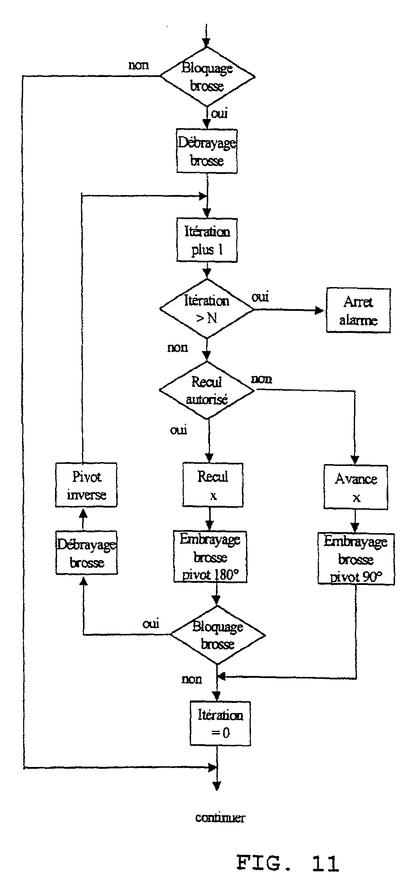

La figure 11 représente un diagramme illustrant un exemple d'algorithme selon l'invention, intervenant en cas de blocage de la brosse du robot.

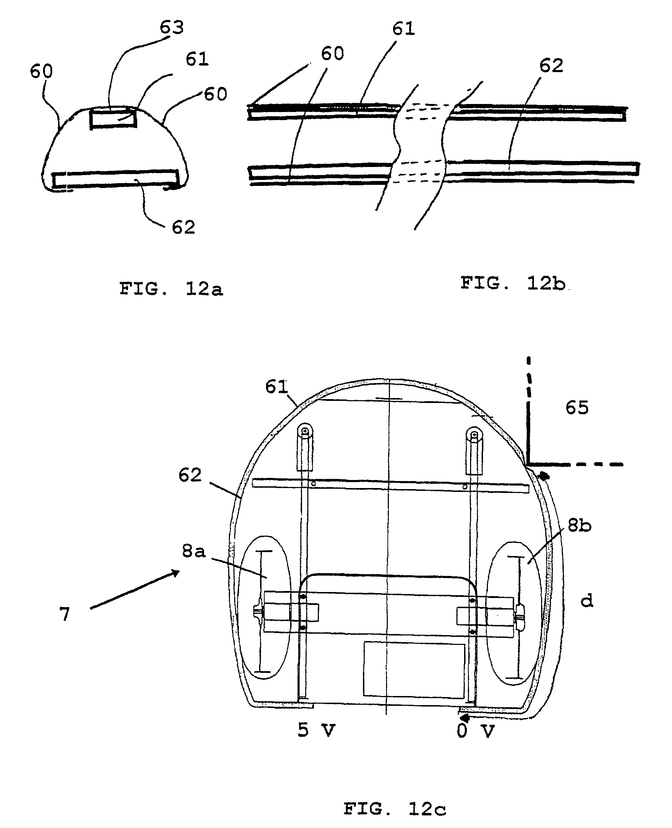

Les figs. 12a à 12c représentent un dispositif de détection du point d'impact du robot avec un obstacle. La fig. 12a est une coupe transversale, la figure 12b est une coupe longitudinale et la figure 12c représente les élément 61, 62 entourant le robot 7 (la gaine 60 n'est pas représentée).

La base du robot est essentiellement entourée, dans le plan de déplacement, d'un élément creux isolant linéaire 60. Cet élément 60 comprend intérieurement et longitudinalement un élément résistif linéaire souple 61 solidaire via la colle 63 à une partie extérieure, par rapport au robot, de la face interne. Cet élément est un élément résistif constitué d'un caoutchouc conducteur. Les extrémités de cet élément résistif sont soumis à une différence de potentiel de 5 V. Opposé à cet élément résistif 61 on prévoit un élément conducteur métallique 62 éventuellement solidaire de 60 également par collage. Un impact d'un obstacle 65 sur l'élément 60 provoquera un contact élastique entre l'élément résistif 61 et l'élément conducteur 62. La mesure de la tension sur le conducteur permet de déterminer la distance d et donc la localisation de l'impact. On comprendra que cette technique de détection de point d'impact peut largement s'appliquer dans le domaine des robots mobiles. Pour certaines applications on peut également prévoir plusieurs éléments 60 dans des plans différents.

## Revendications

1. Système de guidage et de positionnement par rapport à une station fixe (1) pour robot (7) mobile autonome faisant intervenir au moins un faisceau infrarouge directionnel (2') émis par la station fixe, le robot mobile étant muni d'un système de détection (10a, 10b) directionnel d'émission infra-rouge relié à un microordinateur incorporé dans ledit robot, le robot se déplacant sur une surface de travail de manière essentiellement aléatoire, le micro-ordinateur (44) comprenant un algorithme apte à commander le retour à la station fixe (1) par déplacement du robot (7) vers la direction d'émission dudit faisceau infrarouge (2'),
**caractérisé en ce que** le faisceau infrarouge (2') est un faisceau directionnel étroit et **en ce que** le système de détection (10a, 10b) est situé sur le châssis au centre de rotation du robot (7), dirigé dans le sens du mouvement du robot, le positionnement précis dans la station fixe (1) étant effectué par rotation de l'engin autour d'un axe vertical selon un algorithme basé sur la détection du faisceau étroit (2').

2. Système de guidage selon la revendication 1 dans lequel le faisceau directionnel étroit (2') présente un angle compris entre 2 et 10°.

3. Système selon la revendication 1 ou 2 **caractérisé en ce qu'**il fait intervenir au moins deux faisceaux (2',3') de directionalité substantiellement différente émis à partir ou aux environs de la station fixe (1), le ou les faisceaux les moins directionnels (3') servant à l'approche vers la station fixe (1), tandis que le ou les faisceaux plus directionnels (2') sont utilisés pour l'étape ultime de positionnement précis du robot par rapport à cette station fixe (1).

4. Système selon n'importe laquelle des revendicatons précédentes dans lequel l'algorithme du microordinateur initie le retour vers la station fixe de recharge après un temps de travail minimum, indépendamment de l'état de charge de la batterie, et lorsque le robot mobile détecte un rayonnement infra-rouge d'une intensité supérieure à un certain seuil, ledit seuil décroissant avec l'augmentation de la durée du temps de travail et/ou lorsque l'état de charge de la batterie se situe sous un certain niveau.

5. Système selon la revendication 1 ou 2 dans lequel l'algorithme du microordinateur initie le retour vers la station fixe de recharge lorsque l'état de charge de la batterie se situe sous un niveau prédéterminé.

6. Système selon les revendications précédentes **caractérisé en ce que** durant l'étape de retour du robot vers la station fixe , et en fonction de l'état de charge de la batterie et/ou de l'intensité du rayonnement infrarouge détecté, la brosse et/ou la turbine d'aspiration sont inactivés.

7. Système de repérage et de positionnement selon n'importe laquelle des revendications 1 à 5 **caractérisé en ce que** la station fixe (1) émet deux faisceaux infrarouges (2', 3') modulés, essentiellement dans le plan des locaux dans lesquels ledit robot (7) se déplace, un des faisceaux (2') étant sensiblement plus directionnel que l'autre, l'émetteur (3) du faisceau le moins directionnel permettant le repérage et l'approche de la station fixe par le robot mobile portant des détecteurs directionnels (10a, 10b, 11a, 11b) sensibles auxdits faisceaux, les signaux des détecteurs étant traités par un microordinateur (44) commandant l'avancement du robot mobile, l'émetteur (3) du faisceau le moins directionnel étant situé sur la station fixe (1) à un emplacement tel qu'il se trouve en aplomb du robot mobile (7) lorsque ce dernier a rejoint sa position désirée dans la station fixe, le faisceau (2') le plus directionnel étant alors apte à être davantage détecté par lesdits détecteurs, le positionnement précis étant effectué par rotation de l'engin autour d'un axe vertical selon un algorithme basé sur la détection de ce faisceau (2') étroit .

8. Système de repérage et de positionnement selon n'importe laquelle des revendications 1 à 6 **caractérisé en ce que** la station fixe émet au moins trois faisceaux (2',3') infrarouges modulés, un des faisceaux (2') étant sensiblement plus directionnel que les deux autres, les émetteurs (3b, 3c) du faisceau le moins directionnel permettant le repérage et l'approche de la station fixe par le robot mobile portant des détecteurs directionnels sensibles auxdits faisceaux, les signaux des détecteurs étant traités par un microordinateur (44) commandant l'avancement du robot mobile (7), les émetteurs de forte intensité étant dirigés et situés sur la station fixe à des emplacements tels que les faisceaux (2',3') se croisent à proximité immédiate de la station, le faisceau le plus directionnel étant alors apte à être davantage détecté par lesdits détecteurs, le positionnement précis étant effectué par rotation de l'engin autour d'un axe vertical selon un algorithme basé sur la détection de ce faisceau étroit .

9. Système selon laquelle des revendications précédentes dans lequel l'émetteur du faisceau (2) infrarouge le plus directionnel est moins puissant que l'émetteur (3) du faisceau infrarouge moins directionnel.

10. Robot mobile autonome incorporant un microordinateur (44) apte à appliquer le système des revendications 1 à 9.

11. Robot selon la revendication 10 comportant au moins une brosse rotative (24) et un microordinateur (44) contrôlant au moins, via un algorithme, la vitesse et/ou le trajet du robot **caractérisé en ce que** le microordinateur est associé à un algorithme qui tient au moins compte, pour déterminer ladite vitesse et/ou ledit trajet, de la mesure de la vitesse de rotation de ladite brosse rotative.

12. Robot de nettoyage selon la revendication précédente **caractérisé en ce qu'**il s'agit d'un robot aspirateur.

13. Robot selon la revendication précédente **caractérisé en ce que** le microordinateur (44) tient au moins compte, pour déterminer la puissance d'aspiration, de la mesure de la vitesse de rotation de ladite brosse rotative (24).

14. Robot selon la revendication précédente incorporant une technique de guidage pour le nettoyage du sol **caractérisé en ce que** le trajet suivi par le robot (7) dépend de la quantité de particules présente sur la surface à nettoyer, ladite quantité étant estimée par un analyseur de particules (27, 28) situé à proximité de l'orifice d'aspiration du robot aspirateur, ledit analyseur envoyant des signaux au microordinateur (44) porté par le robot mobile et commandant le déplacement du robot en fonction des dits signaux.

15. Robot selon la revendication précédente dans lequel le microordinateur peut commander un ralentissement et/ou un mouvement de va et vient linéaire et/ou un mouvement de va et vient en éventail du robot mobile.

16. Robot selon les revendications 13 et 14 dans lequel le microordinateur garde en mémoire une moyenne globale du niveau de poussière détectée par le détecteur de poussière (27, 28) sur une grande distance, l'activation d'un algorithme de nettoyage particulier tenant compte de ladite moyenne.

17. Robot selon n'importe laquelle des revendications précédentes **caractérisé en ce qu'**il comporte un senseur (60) de collision linéaire entourant en totalité ou en partie la base du carénage, senseur comprenant un conducteur (62) linéaire métallique et, parallèlement, un élément (61) linéaire en plastique conducteur, par exemple en caoutchouc conducteur, dont les extrémités sont soumises à une différence de potentiel, l'élément linéaire en plastique étant apte à entrer élastiquement en contact avec l'élément linéaire conducteur sous l'effet d'une pression momentanée résultant de l'impact du robot avec un obstacle (65) , la mesure du courant mesuré au niveau de l'élément conducteur étant un signal envoyé au microordinateur pour localiser le point d'impact sur la base du carénage.

## Patentansprüche

1. System für einen autonomen beweglichen Roboter (7) zur Führung und Positionierung in Bezug auf eine feste Station (1) unter Zuhilfenahme mindestens eines von der festen Station ausgestrahlten Infrarotrichtstrahls (2'), wobei der bewegliche Roboter mit einem Infrarotabstrahlungs-Richtungsdetektionssystem (10a, 10b) ausgestattet ist, welches an einen im Roboter eingebauten Mikrocomputer angeschlossen ist, und der Roboter auf im Wesentlichen zufallsbedingte Weise auf einer Arbeitsfläche beweglich ist, wobei der Mikrocomputer (44) einen Algorithmus aufweist, der dazu geeignet ist, die Rückkehr zur festen Station (1) durch eine Bewegung des Roboters (7) in Richtung der Abstrahlung des Infrarotstrahls (2') zu steuern,
**dadurch gekennzeichnet, dass** der Infrarotstrahl (2') ein schmaler Richtstrahl ist und das Detektionssystem (10a, 10b) in die Bewegungsrichtung des Roboters gerichtet am Gestell im Rotationsmittelpunkt des Roboters (7) angeordnet ist, wobei die genaue Positionierung in der festen Station (1) durch Drehung der Maschine um eine vertikale Achse gemäß einem auf der Detektion des schmalen Strahls (2') basierenden Algorithmus erfolgt.

2. Führungssystem nach Anspruch 1, worin der schmale Richtstrahl (2') einen Winkel zwischen 2 und 10° aufweist.

3. System nach Anspruch 1 oder 2, **dadurch gekennzeichnet, dass** mindestens zwei im Wesentlichen unterschiedlich gerichtete Richtstrahlen (2', 3') zum Einsatz gelangen, die von der festen Station (1) oder deren Umgebung abgestrahlt werden, wobei der oder die weniger gerichtete(n) Strahl(en) (3') zur Annäherung an die feste Station (1) dienen, während der oder die mehr gerichtete(n) Strahl(en) (2') für den letzten Schritt zur genauen Positionierung des Roboters in Bezug auf diese feste Station (1) verwendet werden.

4. System nach einem der vorhergehenden Ansprüche, worin der Algorithmus des Mikrocomputers nach einer Mindestarbeitszeit unabhängig vom Ladezustand der Batterie, und wenn der bewegliche Roboter eine Infrarotstrahlung mit einer Intensität über einem bestimmten Schwellenwert detektiert, die Rückkehr zur festen Wiederaufladestation auslöst, wobei der Schwellenwert mit zunehmender Dauer der Arbeitszeit, und/oder wenn der Ladezustand der Batterie unter einem bestimmten Niveau liegt, abnimmt.

5. System nach Anspruch 1 oder 2, worin der Algorithmus des Mikrocomputers die Rückkehr zur festen Wiederaufladstation auslöst, wenn der Ladezustand der Batterie unter einem vorbestimmten Niveau liegt.

6. System nach den vorhergehenden Ansprüchen, **dadurch gekennzeichnet, dass** während des Schritts der Rückkehr des Roboters zur festen Station und in Abhängigkeit vom Ladezustand der Batterie und/oder der Intensität der detektierten Infrarotstrahlung die Bürste und/oder die Ansaugturbine inaktiv sind.

7. Ortungs- und Positioniersystem nach irgendeinem der Ansprüche 1 bis 5, **dadurch gekennzeichnet, dass** die feste Station (1) zwei modulierte Infrarotstrahlen (2', 3') im Wesentlichen in der Ebene der Örtlichkeiten, in denen sich der Roboter (7) bewegt, aussendet, wobei einer der Strahlen (2') im Wesentlichen mehr gerichtet ist als der andere, wobei der Sender (3) des weniger gerichteten Strahls die Ortung und Annäherung an die feste Station durch den beweglichen Roboter gestattet, der für die Strahlen empfindliche Richtungsdetektoren (10a, 10b, 11a, 11b) trägt, wobei die Signale der Detektoren durch einen Mikrocomputer (44) verarbeitet werden, welcher die Vorwärtsbewegung des beweglichen Roboters steuert, wobei der Sender (3) des weniger gerichteten Strahls an der festen Station (1) an einer derartigen Stelle angeordnet ist, dass er sich, wenn der Roboter (7) seine gewünschte Position in der festen Station wieder erreicht hat, in einer zu diesem lotrechten Stellung befindet, wobei dann der mehr gerichtete Strahl (2') von den Detektoren besser detektiert werden kann und die genaue Positionierung durch Drehung der Maschine um eine vertikale Achse gemäß einem auf der Detektion dieses schmalen Strahls (2') basierenden Algorithmus bewirkt wird.

8. Ortungs- und Positioniersystem nach irgendeinem der Ansprüche 1 bis 6, **dadurch gekennzeichnet, dass** die feste Station mindestens drei modulierte Infrarotstrahlen (2', 3') aussendet, wobei einer der Strahlen (2') im Wesentlichen mehr gerichtet ist als die anderen beiden, wobei die Sender (3b, 3c) des am wenigsten gerichteten Strahls die Ortung und Annäherung an die feste Station durch den beweglichen Roboter gestattet, der für die Strahlen empfindliche Richtungsdetektoren trägt, wobei die Signale der Detektoren durch einen Mikrocomputer (44) verarbeitet werden, welcher die Vorwärtsbewegung des beweglichen Roboters (7) steuert, wobei die Sender hoher Intensität an der festen Station an derartigen Stellen angeordnet und ausgerichtet sind, dass die Strahlen (2', 3') in unmittelbarer Nähe der Station einander kreuzen, wobei dann der am meisten gerichtete Strahl von den Detektoren besser detektiert werden kann und die genaue Positionierung durch Drehung der Maschine um eine vertikale Achse gemäß einem auf der Detektion dieses schmalen Strahls basierenden Algorithmus bewirkt wird.

9. System nach einem der vorhergehenden Ansprüche, worin der Sender des am meisten gerichteten Infrarotstrahls (2) weniger stark als der Sender (3) des weniger gerichteten Infrarotstrahls ist.

10. Autonomer beweglicher Roboter enthaltend einen integrierten Mikrocomputer (44), geeignet zur Anwendung des Systems der Ansprüche 1 bis 9.

11. Roboter nach Anspruch 10 mit mindestens einer Drehbürste (24) und einem Mikrocomputer (44), der über einen Algorithmus zumindest die Geschwindigkeit und/oder die Bahn des Roboters steuert,
**dadurch gekennzeichnet, dass** dem Mikrocomputer ein Algorithmus zugeordnet ist, der zur Ermittlung besagter Geschwindigkeit und/oder besagter Bahn zumindest das Maß der Rotationsgeschwindigkeit der Drehbürste berücksichtigt.

12. Reinigungsroboter nach dem vorhergehenden Anspruch, **dadurch gekennzeichnet, dass** es sich um einen Saugroboter handelt.

13. Roboter nach dem vorhergehenden Anspruch, **dadurch gekennzeichnet, dass** der Mikrocomputer (44) zur Ermittlung der Saugkraft zumindest das Maß der Rotationsgeschwindigkeit der Drehbürste (24) berücksichtigt.

14. Roboter nach dem vorhergehenden Anspruch mit inkorporierter Führungstechnik zur Reinigung von Böden, **dadurch gekennzeichnet, dass** die Bahn, welcher der Roboter (7) folgt, von der Menge an auf der zu reinigenden Oberfläche vorhandenen Teilchen abhängt, welche Menge durch einen Teilchenanalysator (27, 28) geschätzt wird, der in der Nähe der Ansaugöffnung des Saugroboters angeordnet ist, wobei der Analysator Signale an den vom beweglichen Roboter getragenen Mikrocomputer (44) sendet und die Bewegung des Roboters in Abhängigkeit von diesen Signalen steuert.

15. Roboter nach dem vorhergehenden Anspruch, worin der Mikrocomputer eine Verlangsamung und/oder eine geradlinige Hin- und Herbewegung und/oder eine fächerförmige Hin- und Herbewegung des beweglichen Roboters steuern kann.

16. Roboter nach den Ansprüchen 13 und 14, worin der Mikrocomputer einen globalen Mittelwert für das vom Staubdetektor (27, 28) detektierte Staubniveau über eine große Strecke speichert, wobei die Aktivierung eines speziellen Reinigungsalgorithmus diesen Mittelwert berücksichtigt.

17. Roboter nach irgendeinem der vorhergehenden Ansprüche, **dadurch gekennzeichnet, dass** er einen linearen Kollisionssensor (60) aufweist, der die Basis der Verkleidung zur Gänze oder zum Teil umgibt und einen linearen metallischen Leiter (62) sowie, parallel dazu, ein lineares Element aus leitendem Kunststoff, beispielsweise leitendem Kautschuk, aufweist, dessen Enden einem Spannungsdifferenzial ausgesetzt sind, wobei das lineare Element aus Kunststoff unter der Wirkung eines momentanen Drucks aufgrund eines Anpralls des Roboters an einem Hindernis (65) mit dem linearen Leiterelement elastisch in Kontakt treten kann und das Maß des am Leiterelement gemessenen Stroms ein Signal darstellt, das zur Lokalisierung der Anprallstelle auf der Basis der Verkleidung an den Mikrocomputer gesendet wird.

## Claims

1. A system of guidance and positioning with respect to a fixed station (1), for an autonomous mobile robot (7), utilizing at least a directional infra-red beam (2') emitted by the fixed station, the mobile robot being provided with a directional system of detection (10a, 10b) of infra-red emission connected to a microcomputer incorporated in the said robot, the robot moving on a work surface in an essentially random manner , the microcomputer (44) including an algorithm able to control the return to the fixed station (1) by displacement of the robot (7) in the direction of emission of said infra-red beam (2'),
**characterized in that** the infra-red beam (2') is a narrow directional beam and the system of detection (10a, 10b) is located on the body at the center of rotation of the robot (7), oriented in the direction of movement of the robot, precise positioning in the fixed station (1) being carried out by rotation of the machine about a vertical axis according to an algorithm based on the detection of the narrow beam (2').

2. System of guidance according to claim 1 wherein the narrow directional beam (2') has a diverging angle ranging between 2 and 10 ½.

3. System according to claim 1 or 2 **characterized in that** there is used at least two beams (2', 3') of substantially different directionality emitted from or in the vicinity of the fixed station (1), one or several least directional beams (3') being used for an approach towards the fixed station (1), while one or several more directional beams (2') are used for an ultimate step of precise positioning of the robot relative to the fixed station (1).

4. System according to any of the preceding claims wherein the algorithm of the microcomputer initiates the return towards the fixed station after a minimum working time , independently of the state of charge of the battery, and when the mobile robot detects an infra-red radiation of an intensity higher than a certain threshold, the aforementioned threshold decreasing with the increase in the duration of the working time and/or when the state of charge of the battery is below a predetermined level.

5. System according to claim 1 or 2 wherein the algorithm of the microcomputer initiates the return towards the fixed station when the state of charge of the battery is under a predetermined level.

6. System according to the preceding claims **characterized in that** during the step of return of the robot towards the fixed station, and according to the state of charge of the battery and/or the intensity of the detected infra-red radiation, the brush roller and/or the suction turbine are inactivated.

7. System according to any of the claims 1 to 5 **characterized in that** the fixed station (1) emits two modulated infra-red beams (2', 3'), essentially in the plane of the work surface wherein said robot (7) moves, one of the beams (2') being appreciably more directional than the other, the transmitter (3) of the least directional beam allowing the finding of the direction and the approach of the fixed station by the mobile robot carrying directional sensors (10a, 10b, 11a, 11b) sensitive to said beams, the signals of the sensors being treated by the microcomputer (44) controlling the advancement of the mobile robot, the transmitter (3) of the least directional beam being located on the fixed station (1) such that it is directly above the mobile robot (7) when the latter joins its desired position in the fixed station, the more directional beam (2') being then able to be more intensively detected by the said sensors, precise positioning being carried out by a rotation of the machine around a vertical axis in accordance with an algorithm based on the detection of the narrow beam (2').

8. System of guidance and positioning according to any of the claims 1 to 6 **characterized in that** the fixed station emits at least three modulated infra-red beams (2', 3'), one of the beams (2') being appreciably more directional than two others, the transmitters (3b, 3c) of the least directional beams allowing the finding of the direction and the approach of the fixed station by the mobile robot carrying directional sensors sensitive to said beams, the signals of the sensors being treated by a microcomputer (44) controlling the advancement of the mobile robot (7), the transmitters of high intensity being oriented and located in the fixed station at locations such that the beams (2', 3') cross each other in the immediate vicinity of the station, the more directional beam being then able to be more intensively detected by the aforementioned sensors, the precise positioning being carried out by rotation of the machine around a vertical axis in accordance with an algorithm based on the detection of the narrow beam.

9. System according to any of the preceding claims
wherein the transmitter of the more directional infra-red beam (2) is less powerful than-the transmitter of the less directional infra-red beam.

10. An autonomous mobile robot incorporating a microcomputer (44) and a algorithm able to apply the system of claims 1 to 8.

11. Robot according to claim 10 comprising at least a rotary brush roller (24) and a microcomputer (44) controlling at least, via an algorithm, the speed and/or the path of robot **characterized in that** the microcomputer is associated to an algorithm which takes into account, in order to determine the aforementioned speed and/or the aforementioned path, the measurement of the rotation speed of the aforementioned rotary brush roller.

12. Robot for cleaning according to the preceding claim **characterized in that** it is a robotic vacuum-cleaner.

13. Robot according to the preceding claim **characterized in that** the microcomputer (44) takes at least in account, for determining the suction power, the measurement of revolution speed of the aforementioned brush roller (24).

14. Robot according to the preceding claim wherein the algorithm incorporates a guiding technique for the cleaning of the ground **characterized in that** the path followed by the robot (7) depends on the quantity of particles present on the surface to clean, the said quantity being estimated by a particle analyzer (27, 28) located near the suction nozzle of the robotic vacuum cleaner, the aforementioned analyzer sending the signals to the microcomputer (44) carried by the mobile robot and controlling the displacement of the robot according to the said signals.

15. Robot according to the preceding claim wherein the algorithm can cause a deceleration and/or a linear back and forth movement and/or a back and forth movement in a fan shape of the mobile robot.

16. Robot according to claims 13 and 14 wherein the microcomputer keeps in memory a global average of dust level as detected by the sensor (27, 28) of dust on a long distance, the activation of one particular algorithm for cleaning taking account of the aforementioned average.

17. Robot according to any of the preceding claims **characterized in that** it comprises a linear sensor (60) of collision surrounding entirely or partly the lower outside portion of the careenage, the sensor including a linear metal conductor (62) and, in parallel, a linear element (61) made of conducting plastic, for example conducting rubber, whose ends are subjected to a potential difference, the linear element in plastic being able to come elastically into contact with the conducting linear element under the effect of a temporary pressure resulting from the impact of the robot with an obstacle (65), the measurement of the current measured at the level of the conducting element being a signal fed to the microcomputer to locate the point of impact at the lower outside portion of the careenage.
